# EUROPEAN PATENT APPLICATION

(11) **EP 2 423 861 A1**
(43) Date of publication of application: **29.02.2012**
(21) Application number: 10174296.3
(22) Date of filing: 27.08.2010
(51) Int. Cl.: G06Q 10/00

(54) **Method, apparatus, and system for composing an electronic message**

(71) Applicant: Research In Motion Limited, Waterloo, ON N2L 3W8 (CA)
(72) Inventor: Garg, Neeraj, Waterloo Ontario N2L 5Z5 (CA)
(74) Representative: MERH-IP Matias Erny Reichl Hoffmann

(57) **Abstract**

A system, apparatus and method for composing an electronic message comprising: receiving a first command to compose a first electronic message; displaying, in response to receiving a second command to add an attachment from an electronic message, a content of a message folder; receiving a first selection of a first attachment from a second electronic message from the content; and attaching the first attachment to the first electronic message.

## Description

### FIELD

The specification relates generally to electronic message, and specifically to a method, apparatus, and system for composing an electronic message.

### BACKGROUND

The use of electronic messages (such as email messages) to communicate is common. Electronic messages are generally used to communicate text-based messages but can also be used to transmit other media (e.g., pictures, videos, etc...) as attachments. However, there is a need for a broader source of attachments when composing an electronic message. For example, if there is a need to attach an attachment from a previously received electronic message, the attachment must be first saved to a file system outside of the electronic message system and then retrieved from the file system so that the attachment can be attached to the electronic message that is being composed. The need to save the attachment to a file system in order to attach that attachment to another electronic message wastes device resources. Consequently, there exists a technical problem in how to reduce device resources required to compose an electronic message having an attachment from any previously received electronic message.

### SUMMARY

An aspect of this specification provides an electronic communication device comprising: a processor configured to: receive a first command to compose a first electronic message; display, in response to receiving a second command to add an attachment from an electronic message, a cortent of a message folder; receive a first selection of the first attachment from the second electronic message from the content; and attach the first attachment to the first electronic message.

The processor can further be configured to: receive a second selection of a second attachment from a third electronic message; and attach the second attachment to the first electronic message.

The second electronic message can be from a first message folder and the third electronic message can be from a message folder different from the first message folder. The second electronic message can be from a first electronic message account and the third electronic message can be from an account different from the first electronic message account. The second electronic message can be from a first server and the third electronic message can be from a server different from the first server. The content can include a list of attachments compiled from a search of the message folder. The content can include a list of attachments that were received within a predefined duration prior to a current time.

Another aspect of this specification provides a method implemented on an electronic communication device for composing an electronic message, the method comprising: receiving a first command to compose a first electronic message; displaying, in response to receiving a second command to add an attachment from an electronic message, a content of a message folder; receiving a first selection of a first attachment from a second electronic message from the content; and attaching the first attachment to the first electronic message.

The method can comprise: receiving a second selection of a second attachment from a third electronic message; and attaching the second attachment to the first electronic message.

The second electronic message can be from a first message folder and the third electronic message can be from a message folder different from the first message folder. The second electronic message can be from a first electronic message account and the third electronic message can be from an account different from the first electronic message account. The second electronic message can be from a first server and the third electronic message can be from a server different from the first server.

The displaying content can include displaying a list of attachments compiled from a search of the message folder. The displaying content can include displaying a list of attachments that were received within a predefined duration prior to a current time.

Another aspect of this specification provides a computer program product, for an electronic communication device, comprising a computer readable storage medium having a computer-readable program code adapted to be executable on the electronic communication device to implement a method for composing an electronic message, the method comprising: receiving a command to compose a first electronic message; displaying, in response to receiving a command to add an attachment from an electronic message, a content of a message folder; receiving a first selection of a first attachment from a second electronic message from the content; and attaching the first attachment to the first electronic message.

### BRIEF DESCRIPTIONS OF THE DRAWINGS

Embodiments are described with reference to the following figures, in which:

Figure 1 depicts a system for composing an electronic message;

Figure 2 is a block diagram of an example embodiment of a server of Figure 1;

Figure 3 is a block diagram of an example embodiment of an electronic communication device of Figure 1;

Figure 4 depicts a block diagram of a method for composing an electronic message, according to non-limiting embodiments;

Figure 5 depicts various components of a message application, according to non-limiting embodiments;

Figure 6 depicts various components of an electronic message editing interface implemented in the message application of figure 5, according to non-limiting embodiments;

Figure 7 depicts an example content hierarchy of electronic message accounts, according to non-limiting embodiments;

Figure 8 depicts an example electronic message list, according to non-limiting embodiments;

Figure 9 depicts an example attachment list, according to non-limiting embodiments;

Figure 10 depicts a block diagram of a variation of the method of figure 4;

Figure 11 depicts a block diagram of another variation of the method of figure 4;

Figure 12 depicts an example search dialog box, according to non-limiting embodiments;

Figure 13 depicts a block diagram of yet another variation of the method of figure 4;

Figure 14 depicts a block diagram of a method for composing and sending an electronic message, according to non-limiting embodiments;

Figure 15 depicts a block diagram of a variation of the method of figure 13;

Figure 16 depicts a block diagram of a variation of the method of figure 14; and

Figure 17 depicts a block diagram of another variation of the method of figure 14.

### DETAILED DESCRIPTION OF THE EMBODIMENTS

It will be appreciated that for simplicity and clarity of illustration, where considered appropriate, reference numerals may be repeated among the figures to indicate corresponding or analogous elements. In addition, numerous specific details are set forth to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

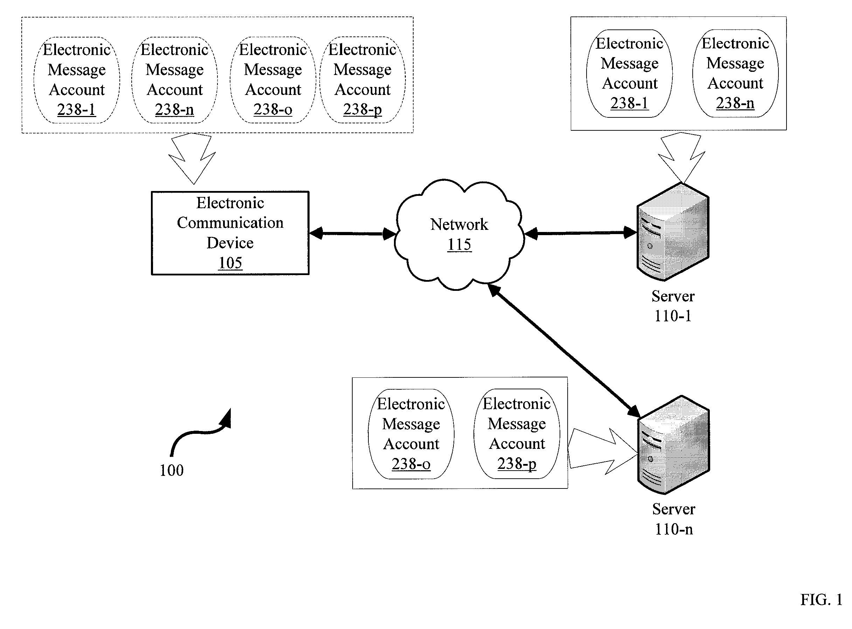

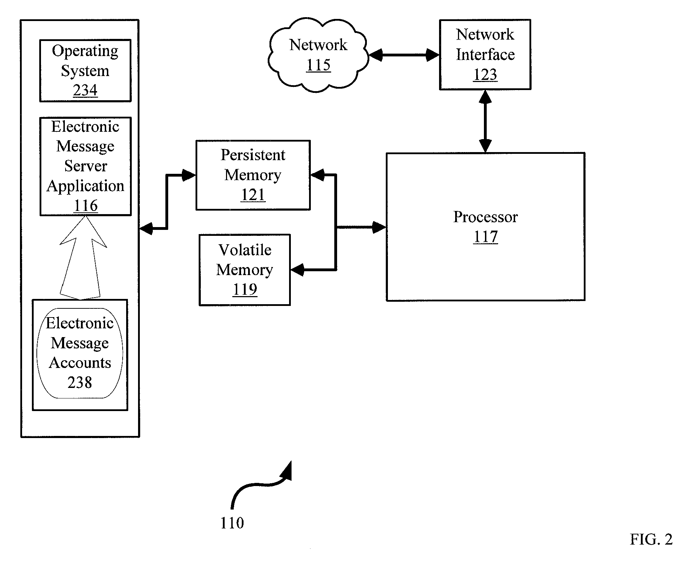

The embodiments described herein generally relate to composing an electronic message via an electronic communication device. Figure 1 depicts a system 100 for composing an electronic message (such as an email message), according to non-limiting embodiments. The system 100 comprises an electronic communication device 105 in communication with a plurality of servers 110-1 ... 110-n (hereafter, generically each is referred to as server 110, and collectively they are referred to as servers 110) via a network 115. The electronic communication device 105 can include any communications device capable of effecting electronic message communications. Non-limiting examples of the electronic communication device 105 can include pagers, cellular phones, smartphones, wireless organizers, personal digital assistants, computers, laptops, handheld wireless communication devices, wirelessly enabled notebook computers and the like. It will be understood by those skilled in the art that there can be more than one electronic communication device 105 in system 100. The servers 110 can be based on any well-known server environment, capable of hosting an electronic message server application 116, including a module that houses one or more central processors 117, volatile memory 119 (e.g. random access memory), persistent memory 121 (e.g. hard disk devices), and network interfaces 123 (e.g., network card) to enable the server 110 to communicate over the network 115 (see figure 2). The server 110, for example, can be a Sun Fire V480 from Sun Microsystems, Inc. of Palo Alto Calif., running a UNIX operating system, and having four central processing units each operating at about nine-hundred megahertz and having about sixteen gigabytes of random access memory. However, it is to be emphasized that this particular server is merely an example, and a vast array of other types of computing environments for the servers 110 is contemplated. It will be understood by those skilled in the art that the components of server 110-1 need not be the same as the components of server 110-n. The persistent memory 121 can be used to store the operating system 125 and the electronic message server application 116. Non-limiting examples of the network 115 can include any suitable combination of wired and/or wireless networks, including but not limited to packet-based networks, the Internet, analog networks, the Public Switch Telephone Network (PSTN), LAN, WAN, cell phone networks, WiFi networks, WiMax networks and/or a combination thereof. Other suitable types of electronic communication devices, networks, and servers are within the scope of present embodiments.

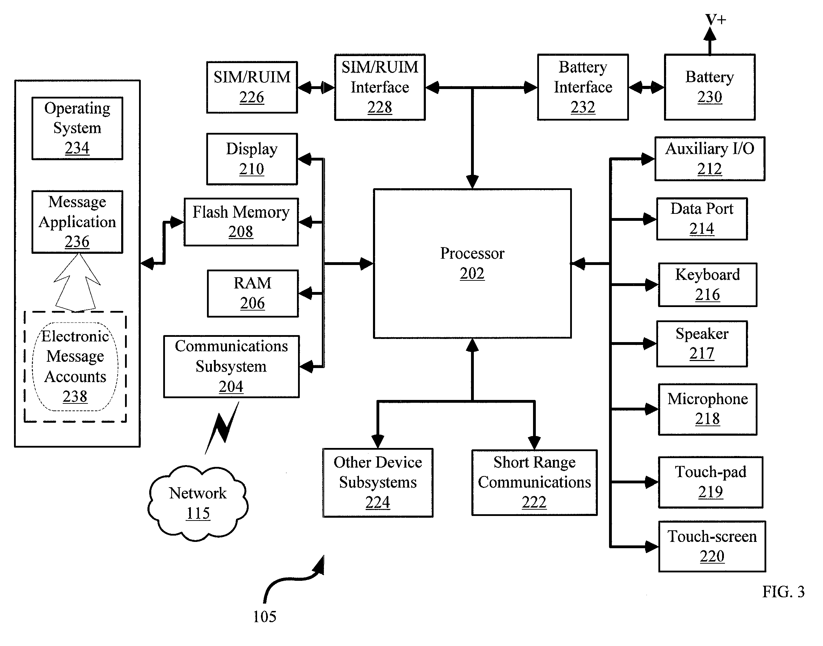

Figure 3 depicts a non-limiting embodiment of electronic communication device 105. The electronic communication device 105 includes a number of components such as a processor 202 that controls the overall operation of the electronic communication device 105. Communications functions, including data and voice communications, are performed through a communications subsystem 204. The communications subsystem 204 receives messages from and sends messages wirelessly to network 115. In this example embodiment of the electronic communication device 105, the communications subsystem 204 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the embodiments described herein are intended to use any other suitable standards that are developed in the future. The wireless link connecting the communications subsystem 204 with the network 115 represents one or more different Radio Frequency (RF) channels, operating according to defined protocols specified for GSM/GPRS communications. With newer network protocols, these channels are capable of supporting both circuit switched voice communications and packet switched data communications.

The processor 202 also interacts with additional subsystems such as a Random Access Memory (RAM) 206 (which can be generally viewed as any type of volatile storage), a flash memory 208 (which can be generally viewed as any type of non-volatile storage), a display 210, an auxiliary input/output (I/O) subsystem 212, a data port 214, a keyboard 216, a speaker 217, a microphone 218, touch-pad 219, touch-screen 220, short-range communications 222 and other device subsystems 224.

Some of the subsystems of the communications device 105 perform communication-related functions, whereas other subsystems may provide "resident" or on-device functions. By way of example, the display 210 and the keyboard 216 may be used for both communications-related functions, such as entering a text-based message for transmission over the network 115, and device-resident functions such as a calculator or task list.

In a present non-limiting example implementation, touch-pad 219 is configured to not only be sensitive to touch inputs, but touch-pad 219 is also mechanically structured as a mechanical switch, such that it can also be mechanically depressed and moved in a direction that is normal to the surface of touch-pad 219. The mechanical switch is also spring biased towards a non-depressed position, so that upon release the mechanical switch returns to the non-depressed position. Accordingly, touch-pad 219 is configured to receive selection inputs by mechanical depression of touch-pad 219, while touch-screen 220 is configured to receive selection inputs corresponding to screen focus by a tap received on touch-screen 220. It should be noted, however, that in variations, touch-pad 219 can additionally be configured, or alternatively configured, to receive selection inputs by a tap received on touch-pad 219. Where touch-pad 219 can received a tap input, then the mechanical switch can be removed from touch-pad 219 altogether.

While not shown, in another variation it should be understood that touch-screen 220 can also be varied to also include a mechanical switch so that a force on touch-screen 220 will select (i.e. "click") an item that is in focus on touch screen 220. Such a mechanical switch can be provided for touch-screen 220 either in lieu of, or in addition to, the "tap" input capability provided for touch-screen 220.

The electronic communication device 105 can send and receive communication signals over the network 115 after required network registration or activation procedures have been completed. Network access is associated with a subscriber or user of the electronic communication device 105. In certain embodiments, to identify a subscriber, the electronic communication device 105 utilizes a SIM/RUIM card 226 (i.e. Subscriber Identity Module or a Removable User Identity Module) to be inserted into a SIM/RUIM interface 228 to communicate with a network. The SIM card or RUIM 226 is one type of a conventional "smart card" that can be used to identify a subscriber of the electronic communication device 105 and to personalize the electronic communication device 105, among other things. Without the SIM card 226, the electronic communication device 105 is not fully operational for communication with the network 115. By inserting the SIM card/RUIM 226 into the SIM/RUIM interface 228, a subscriber can access all subscribed services. Services may include: web browsing and messaging such as electronic message, voice mail, Short Message Service (SMS), and Multimedia Messaging Services (MMS). More advanced services may include: point of sale, field service and sales force automation. The SIM card/RUIM 226 includes a processor and memory for storing information. Once the SIM card/RUIM 226 is inserted into the SIM/RUIM interface 228, it is coupled to the processor 202. To identify the subscriber, the SIM card/RUIM 226 can include some parameters such as an International Mobile Subscriber Identity (IMSI). An advantage of using the SIM card/RUIM 226 is that a subscriber is not necessarily bound by any single physical electronic communication device. The SIM card/RUIM 226 may store additional subscriber information for an electronic communication device as well, including datebook (or calendar) information and recent call information. Alternatively, identification information can also be programmed into the flash memory 208.

The electronic communication device 105 is a battery-powered device and includes a battery interface 232 for receiving one or more rechargeable batteries 230. In at least some embodiments, the battery 230 can be a smart battery with an embedded microprocessor. The battery interface 232 is coupled to a regulator (not shown), which assists the battery 230 in providing power V+ to the electronic communication device 105. Although current technology makes use of a battery, future technologies such as micro fuel cells may provide the power to the electronic communication device 105.

The electronic communication device 105 also includes an operating system 234 and software components such as message application 236. The operating system 234 and the message application 236 that are executed by the processor 202 are typically stored in a persistent store such as the flash memory 208, which may alternatively be a read-only memory (ROM) or similar storage element (not shown). Those skilled in the art will appreciate that portions of the operating system 234 and message application 236 may be temporarily loaded into a volatile store such as the RAM 206. Other software components can also be included, as is well known to those skilled in the art.

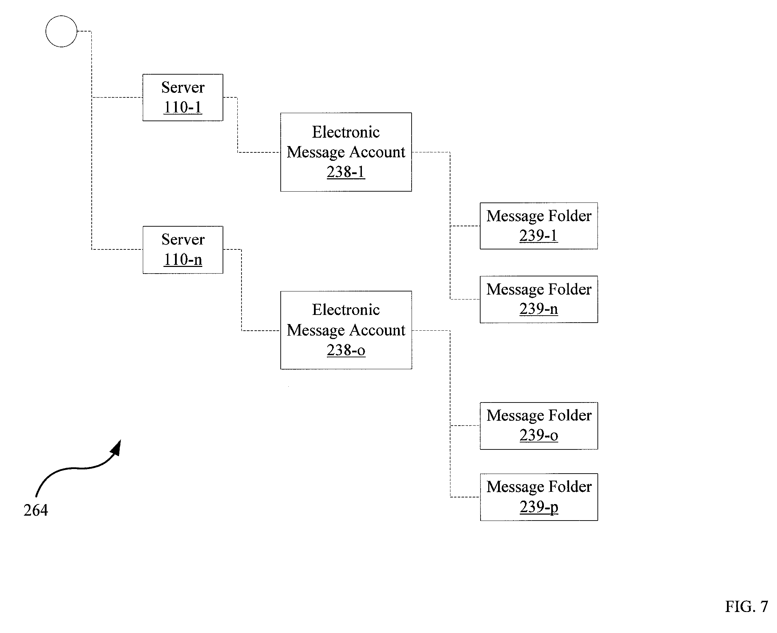

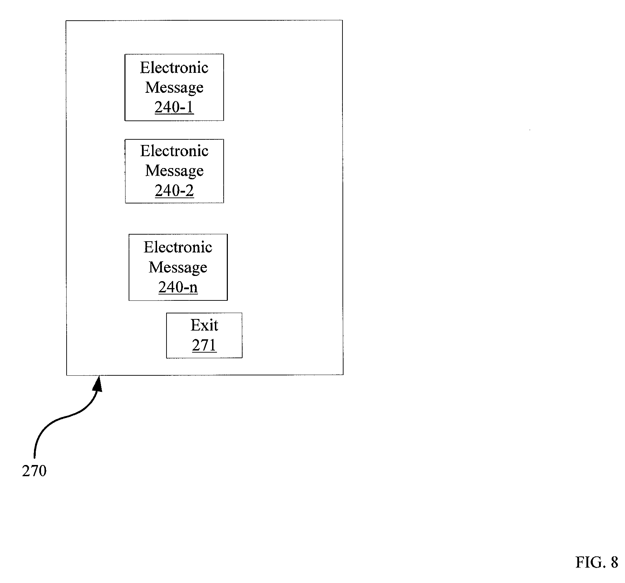

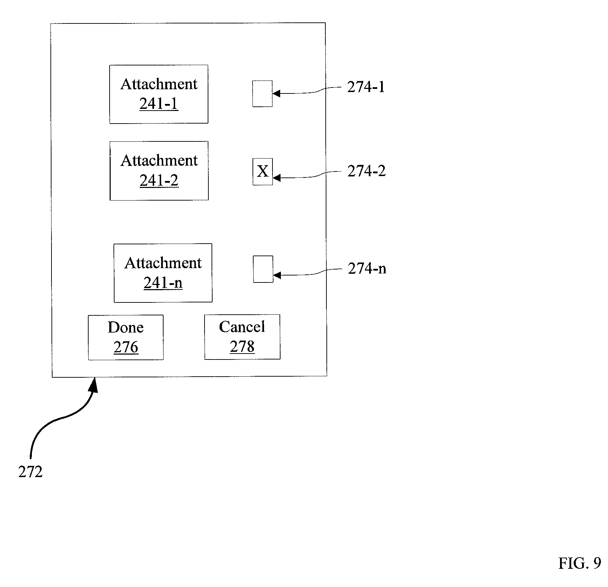

Message application 236 allows electronic communication device 105 to send and receive electronic messages. Various alternatives exist for the message application 236 as is well known to those skilled in the art. Messages that have been sent or received are typically stored in the flash memory 208 of the electronic communication device 105 or some other suitable storage element in the electronic communication device 105. In at least some embodiments, some of the sent and received messages may be stored remotely from the electronic communication device 105 such as in a data store of the server 110. In a non-limiting embodiment, the message application 236 comprises an electronic message client application associated with a plurality of electronic message accounts 238-1 ... 238-n, 238-o ... 238-p (hereafter, generically each is referred to as electronic message account 238, and collectively they are referred to as electronic message accounts 238). An electronic message account 238 can comprise one or more message folders 239-1 ... 239-n ... 239-o ... 239-p (hereafter, generically each is referred to as message folder 239, and collectively they are referred to as message folders 239) (see figure 7). A message folder 239 can comprise one or more electronic messages 240-1, 240-2 ... 240-n (hereafter, generically each is referred to as electronic message 240, and collectively they are referred to as electronic messages 240) (see figure 8). (In implementations where the electronic message 240 is an email message, the message folders 239 are sometimes also referred to as mailboxes.) An electronic message 240 can comprise one or more attachments 241-1, 241-2 ... 241-n (hereafter, generically each is referred to as attachment 241, and collectively they are referred to as attachments 241) (see figure 9). In the embodiment depicted by figures 1 and 2, the electronic message accounts 238-1 ... 238-n and 238-o ... 238-p are hosted by server 110-1 and server 110-n, respectively (see figure 1). The electronic message accounts 238 are managed by the electronic message server application 116 but accessible by the electronic communication device 105. In some embodiments, the electronic message accounts 238 can be hosted by the electronic communication device 105.

Additional applications can be loaded onto the electronic communication device 105 through at least one of the network 115, the auxiliary I/O subsystem 212, the data port 214, the short-range communications subsystem 222, or any other suitable device subsystem 224. This flexibility in application installation increases the functionality of the electronic communication device 105 and may provide enhanced on-device functions, communication-related functions, or both. For example, secure communication applications may enable electronic commerce functions and other such financial transactions to be performed using the electronic communication device 105.

The data port 214 enables a subscriber to set preferences through an external device or software application and extends the capabilities of the electronic communication device 105 by providing for information or software downloads to the electronic communication device 105 other than through a wireless communication network. The alternate download path may, for example, be used to load an encryption key onto the electronic communication device 105 through a direct and thus reliable and trusted connection to provide secure device communication.

The data port 214 can be any suitable port that enables data communication between the electronic communication device 105 and another electronic communication device. The data port 214 can be a serial or a parallel port. In some instances, the data port 214 can be a USB port that includes data lines for data transfer and a supply line that can provide a charging current to charge the battery 230 of the electronic communication device 105.

The short-range communications subsystem 222 provides for communication between the electronic communication device 105 and different systems or devices, without the use of the network 115. For example, the subsystem 222 may include an infrared device and associated circuits and components for short-range communication. Examples of short-range communication standards include standards developed by the Infrared Data Association (IrDA), Bluetooth(TM), and the 802.11 family of standards developed by IEEE.

In use, a received signal such as a text-based message, an electronic message, or web page download will be processed by the communications subsystem 204 and input to the processor 202. The processor 202 will then process the received signal for output to the display 210 or alternatively to the auxiliary I/O subsystem 212. A subscriber may also compose data items, such as electronic messages, for example, using the keyboard 216 in conjunction with the display 210 and possibly the auxiliary I/O subsystem 212. The auxiliary subsystem 212 may include devices such as: a mouse, track ball, infrared fingerprint detector, or a roller wheel with dynamic button pressing capability. The keyboard 216 is preferably an alphanumeric keyboard and/or telephone-type keypad. However, other types of keyboards may also be used. A composed item may be transmitted over the network 115 through the communications subsystem 204.

For voice communications, the overall operation of the electronic communication device 105 is substantially similar, except that the received signals are output to the speaker 217, and signals for transmission are generated by the microphone 218. Alternative voice or audio I/O subsystems, such as a voice message recording subsystem, can also be implemented on the electronic communication device 105. Although voice or audio signal output is accomplished primarily through the speaker 217, the display 210 can also be used to provide additional information such as the identity of a calling party, duration of a voice call, or other voice call related information.

When composing an electronic message, attachments can be attached to the electronic message by selecting an attachment 241 from flash memory 208. In the context of the present application, unless otherwise stated, attaching or adding an attachment 241 are used interchangeably and comprises inserting the attachment 241 to the electronic message as a separate file, an embedded file, or a part of the electronic message. Typically, the source of the attachment 241 is limited to a file system associated with the operating system 234. If there is a need to attach an attachment 241 from a previously received electronic message 240, the attachment 241 must be first saved to the file system outside of the electronic message accounts 238 and then retrieved from the file system so that the attachment 241 can be attached to the electronic message that is being composed. The need to save the attachment 241 outside of the electronic message account 238 in order to attach that attachment 241 to another electronic message wastes device resources such as the processor 202, flash memory 208, RAM 206, and battery 230. Consequently, there exists a technical problem in how to reduce the time and device resources required to compose an electronic message having an attachment 241 from any previously received electronic message 240.

Figures 1-17 illustrate non-limiting examples of a method, apparatus, and system for controlling a display and input device to reduce the time and device resources required to compose an electronic message having an attachment 241 from any previously received electronic message 240.

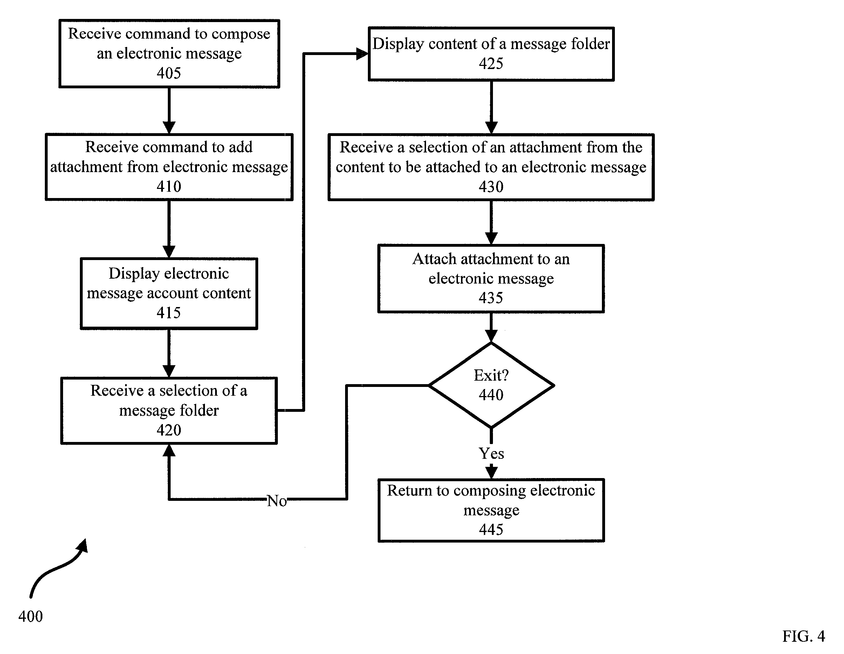

Referring now to Figure 4, a flowchart depicting a method for composing an electronic message is indicated generally at 400. Method 400 can be implemented on system 100 or a suitable variation thereof. The method 400 can be executed on processor 202 as part of the message application 236.

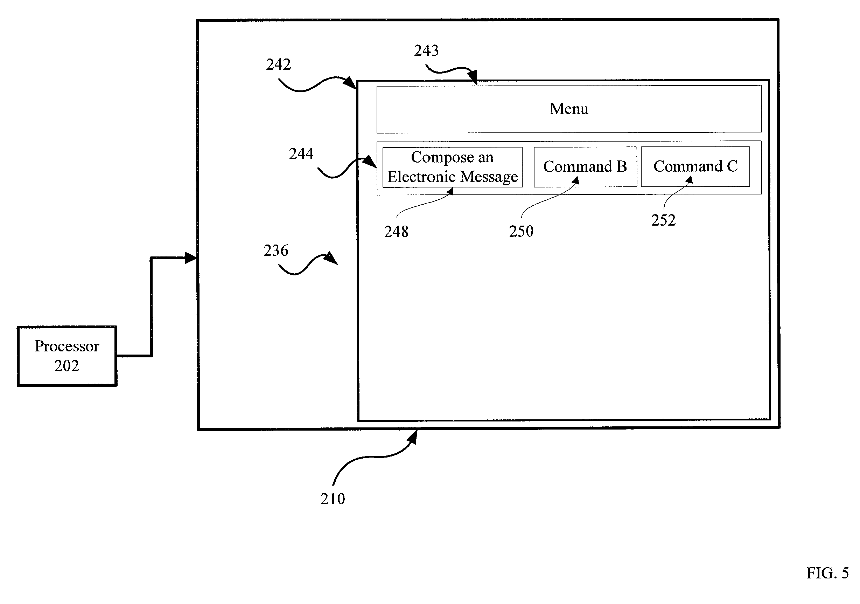

Figure 5 depicts, according to a non-limiting embodiment, various components of the message application 236 generated on display 210 when the message application 236 is being executed by the processor 202. For example, the processor 202 causes the display 210 to generate the main interface 242. The main interface 242 comprises a menu 243 and a toolbar 244. The menu 243 provides various functionalities via dropdown menus (not shown). The toolbar 244 provides buttons 248, 250, 252. Selection of any of the buttons 248, 250, 252 causes a signal to be sent to the processor 202 to effect the command associated with the button that has been selected.

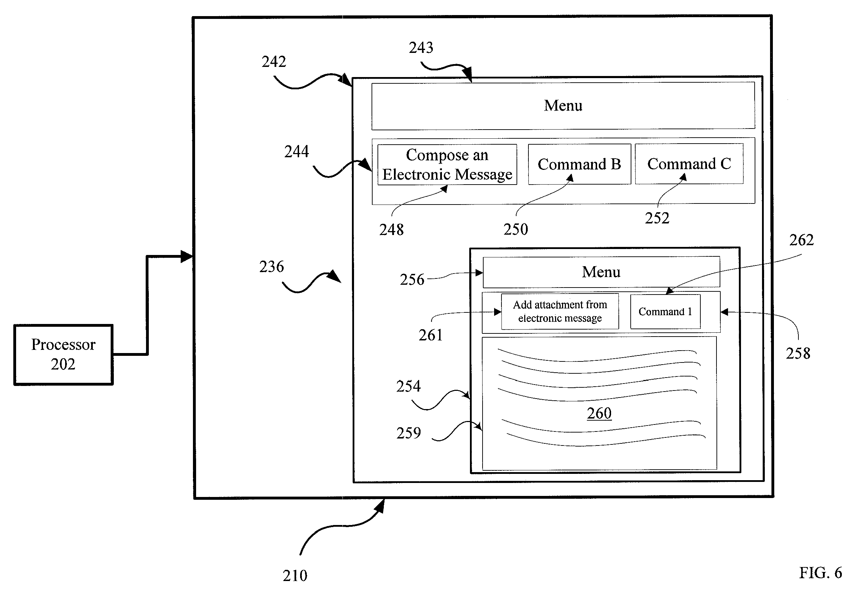

Block 405 comprises receiving a command to compose an electronic message. For example, in a non-limiting embodiment depicted by figure 5, the processor 202 receives a signal from the selection of button 248 (e.g., via the touch-pad 219). However, those skilled in the art will recognize that other methods of receiving the command to compose an electronic message are contemplated such as the processor 202 receiving a signal from the selection of a menu item (not shown) associated with the command to compose an electronic message. The menu item, for example, can be selected from menu 243 or a popup menu (not shown). In a non-limiting embodiment depicted by figure 6, upon receipt of the command to compose an electronic message, the processor 202 causes the display 210 to generate an electronic message editing interface 2.54 comprising a menu 256, a tool bar 258, and an editing interface 259. The toolbar 2.58 comprises buttons 261, 262. The editing interface 259 displays the content of an electronic message 260. The electronic message 260 differs from electronic messages 240 inthat electronic messages 240 have already been composed and are associated with an electronic message account 238 while electronic message 260 is in the process of being composed and is not yet associated with any electronic message account 238. It is understood to a person of ordinary skill in the art that drafts of the electronic message 260 can be stored in memory such as flash memory 208 and can be associated with an electronic message account 238.

Block 410 comprises receiving a command to add attachment 241 from electronic message 240. For example, in the embodiment depicted by figure 6, the processor 202 receives a signal from the selection of the button 261. However, those skilled in the art will now recognize that other methods of receiving the command to add attachment from electronic message 240 are contemplated such as the processor 202 receiving a signal from the selection of a menu item (not shown) associated with the command to add attachment from electronic message 240. The menu item, for example, can be selected from menu 256 or a popup menu (not shown).

Block 415 comprises displaying electronic message account content. For example, in a non-limiting embodiment depicted by figure 7, the processor 202 causes the display 210 to generate a representation of a content hierarchy 264 of servers 110, electronic message accounts 238 and message folders 239. Initially, the display 210 can generate representations of the servers 110 by themselves and a selection (e.g., selecting and holding for a predetermined duration, double tapping) of any server 110 causes the processor 202 to instruct the display 210 to generate the representations of electronic message accounts 238 associated with the selected server 110. Likewise, representations of the message folders 239 from a selected electronic message account 238 can be generated upon the receipt of a selection of that electronic message account 238. For example, figure 7 depicts a situation after two electronic message accounts 238-1, 238-o have been selected.

Block 420 comprises receiving a selection of a message folder 239. For example, the processor 202 receives a signal from touch-pad 219 indicating that a message folder 239 has been selected (e.g., double tapping the representation of the message folder 239 to be selected). Those of ordinary skill in the art will understand that block 420 can comprise receiving navigational input to navigate within the content hierarchy 264 prior to receiving a selection of the message folder 239. In response to receiving the selection of a message folder 239, the method 400 advances to block 425.

Block 425 comprises displaying content of a message folder 239. For example, the processor 202 causes the display 210 to generate a representation of the content of a message folder 239 selected in block 420. Generating the a representation of the content of a message folder 239 can comprise generating a representation of a list of electronic messages 240 in an electronic message list 270, as depicted by figure 8 in a non-limiting embodiment. It will be understood by those of ordinary skill in the art that other methods of displaying the content of a message folder 239 is contemplated such as using a drop down box. It will be understood by those of ordinary skill in the art that various methods can be used to exit the electronic message list 270 (e.g., selecting exit button 271 or selecting an electronic message 240 to view the content of the selected electronic message 240 etc ...).

Block 430 comprises receiving a selection of an attachment 241 from the content to be attached to the electronic message 260. For example, the processor 202 receives a signal from touch-pad 219 indicating that one or more attachments 241 from an electronic message 240 from the content (representation of which were generated on the display 210 in block 425) have been selected to be attached to the electronic message 260. It will be understood by those of ordinary skill in the art that the method that the attachment is selected is not particularly limiting. For example, an attachment 241 can be selected from an attachment list 272 depicted by figure 9 in a non-limiting embodiment. Attachment list 272 comprises attachments 241 with their corresponding checkboxes 274-1, 274-2 ... 274-n (hereafter, generically each is referred to as checkbox 274, and collectively they are referred to as checkboxes 274), a done button 276, and a cancel button 278. The selection of either of the done button 276 or the cancel button 278 causes the processor 202 to instruct the display 210 to erase the representation of the attachment list 272 from the display 210. However, the selection of the done button 274 also causes the processor 202 to designate any attachment 241 having a mark (e.g., "x") in its corresponding checkbox as selected attachments. In the example depicted by figure 9, the selection of the done button 276 causes the processor 202 to designate attachment 241-2 as a selected attachment because checkbox 274-2, associated with attachment 241-2, has been marked. Although, only one attachment 241 is selected (i.e., attachment 241-2) in figure 9, those skilled in the art will appreciate that zero to multiple attachments 241 can be selected from attachment list 272.

Block 435 comprises attaching an attachment 241 to an electronic message. For example, the processor 202 causes the RAM 206 to add the attachments 241 (selected in block 430) to the electronic message 260.

Block 440 comprises determining whether to exit the method 400. For example, the processor 202 determines whether a command to exit has been received. If the determination at block 440 is "Yes", the method 400 advances to block 445. For example, the processor 202 receives a signal from a selection of amenu item (not shown) associated with the command to exit method 400.

Block 445 comprises returning to composing the electronic message 260. For example, the processor 202 closes all interfaces or dialog boxes that were created by the blocks 410 to 435, enabling the continuation of the composing of the electronic message 260.

If the determination at block 440 is "No", the method 400 returns to block 420 to enable the selection of other attachments 241 from contents of the same message folder 239 selected in the first execution of block 420 or other message folders 2.39. Repeated performance of blocks 420 to 435 enables the attaching, to the electronic message 260, of attachments 241 from different message folders 239, different electronic message accounts 238, and different servers 110.

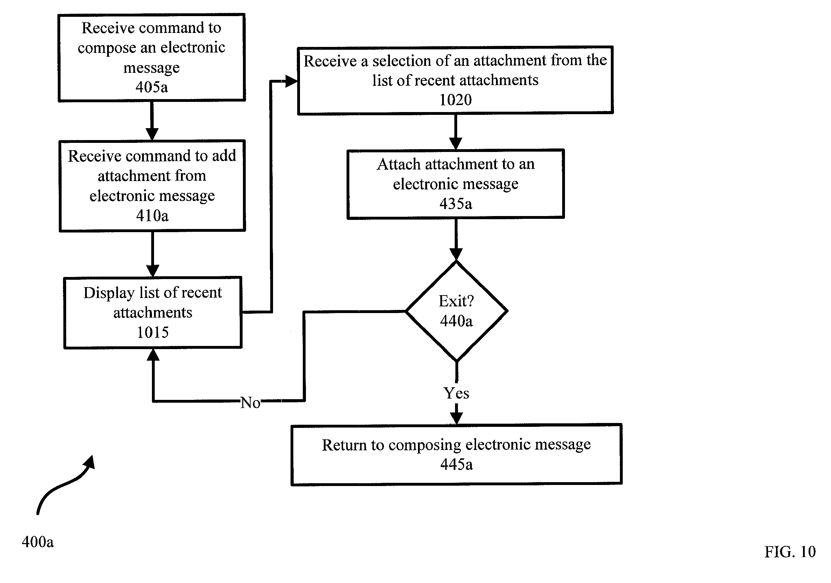

Figure 10 depicts a non-limiting example of a variation of the method 400, generally indicated at 400a. The method 400a is similar to the method 400, and like blocks bear like references except followed by the suffix "a". Of note is that in the method 400a, blocks 1015 and 1020 replace blocks 415, 420, 425, and 430 of the method 400.

Block 1015 comprises displaying a list of recent attachments. For example, the processor 202 compiles a list of recent attachments and causes the display 210 to generate a representation of the list of recent attachments on the display 210. The list of recent attachments comprises all attachments 241 received by the electronic communication device 105 within a predefined duration prior to a current time. The predefined duration can comprise a default value (e.g., 15 days) or a dynamically configured value. The list of recent attachments 241 can be displayed via attachment list 272 depicted by figure 9 (described above).

Block 1020 comprises receiving a selection of an attachment 241 from the list of recent attachments. For example, the processor 202 receives a signal from touch-pad 219 indicating that one or more attachments 241 from the attachment list 272 (representation of which were generated on the display 210 in block 1015) have been selected to be attached the electronic message 260. Referring to the example depicted by figure 9, execution of block 1020 is effected by the selection of the done button 276.

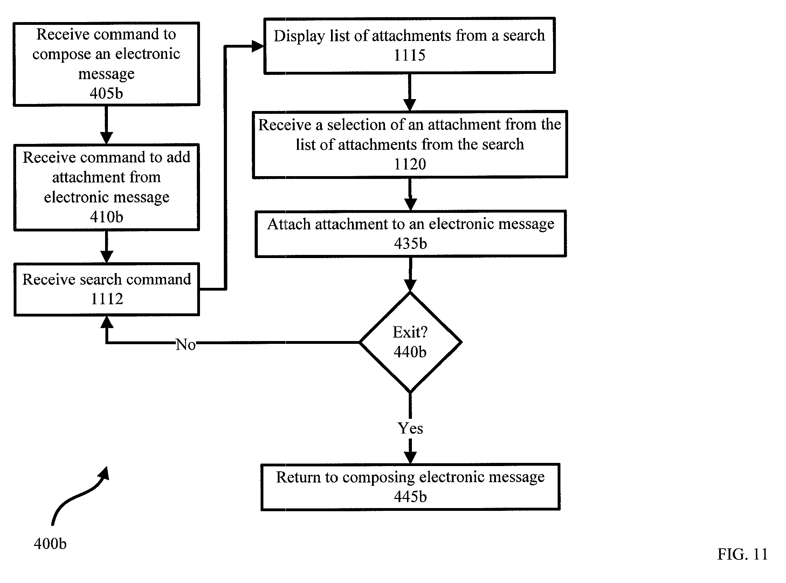

Figure 11 depicts a non-limiting example of another variation of the method 400, generally indicated at 400b. The method 400b is similar to the method 400, and like blocks bear like references except followed by the suffix "b". Of note is that in the method 400b, blocks 1112, 1115 and 1120 replace blocks 415, 420, 425, and 430 of the method 400.

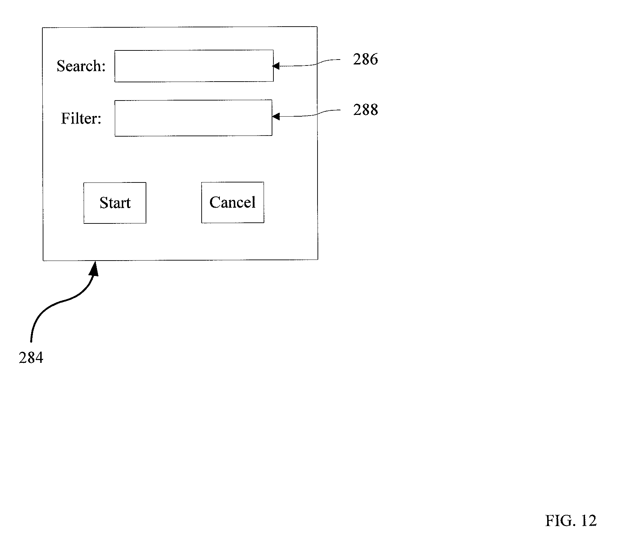

Block 1112 comprises receiving a search command. For example, in a non-limiting embodiment, the processor 202 receives search parameters via a search dialog box 284 (see figure 12). (In response to the command received in block 410b, the processor 202, for example, can cause the display 210 to display the search dialog box 284.) The search parameters can comprise keywords received from search edit box 286 and filters received from filter edit box 288. The filters can be used to limit the search such as by date (e.g., search between April 23, 2010 and April 27, 2010), by electronic message accounts 238 or the like. It will be understood by those of ordinary skill in the art that various types of search are contemplated. For example, the search can be conducted based on subject, recipients, senders, attachment names, date of receipt of the electronic message 240, type of attachment, or the like.

Block 1115 comprises displaying a list of attachments 241 from a search. For example, the processor 202 causes the display 210 to generate a representation of a list of attachments 241 that were compiled from executing the search command received in block 1112. The list can be displayed via attachment list 272 depicted by figure 9 and described above.

Block 1120 comprises receiving a selection of an attachment 241 from the list of attachments 241 from the search. For example, the processor 202 receives a signal from touch-pad 219 indicating that one or more attachments 241 from the attachment list 272 (representation of which were generated on the display 210 in block 1115) have been selected to be attached to the electronic message 260. Referring to the example depicted by figure 9, execution of block 1120 is effected by the selection of the done button 276.

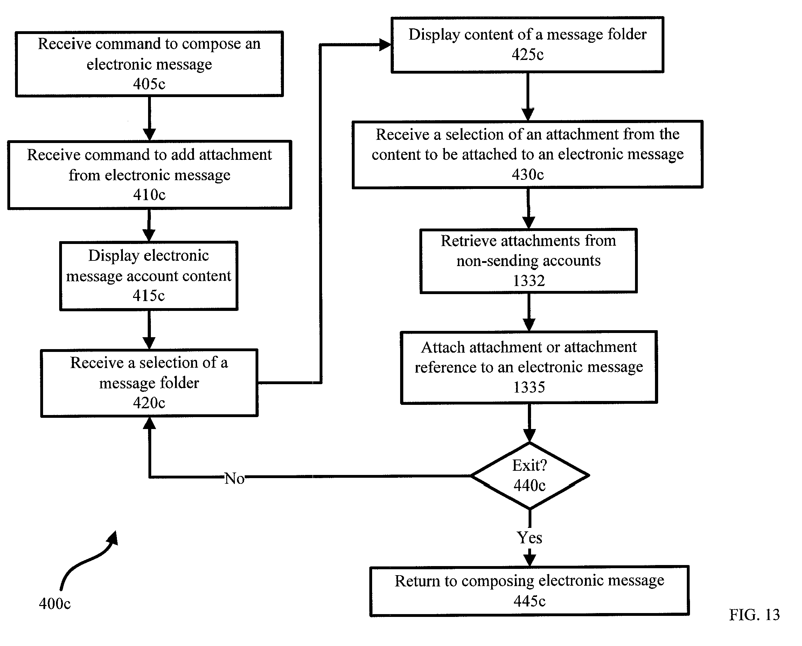

Figure 13 depicts a non-limiting example of yet another variation of the method 400, generally indicated at 400c. The method 400c is similar to the method 400, and like blocks bear like references except followed by the suffix "c". Of note is that the method 400c replaces block 435 of method 400 with blocks 1332 and 1335. In the embodiment depicted by figure 13, it is contemplated, for example, that, where possible, the electronic communication device 105, when adding attachments 241 to an electronic message, will attach a reference of the attachment 241. The reference can include the actual attachment 241, an identifier of the attachment 241, or a pointer to the attachment 241, or a combination thereof. In the context of the present application (unless otherwise specified), actual attachment 241 includes the file containing the content of the attachment 241 and can have various file extensions depending on the format of the content (e.g., jpg, mpg, txt, doc, pdf, etc.). The identifier of the attachment 241 can include an alphanumeric identifier. The pointer can include a memory address where the attachment 241 is stored. For embodiments where at least one of the selected attachments 241 is from a non-sending account, the electronic communication device 105 may or may not be able to attach references of attachments 214 because the electronic message server application 116 on the server 110 may or may not have access to attachments 241 that are not from the sending account For example, the sending account may not have the credentials to access non-sending accounts. In the context of the present application (unless otherwise specified), a sending account is an electronic message account 238 that the electronic communication device 105 will use to send the electronic message 260 and a non-sending account is an electronic message account 238 that is associated with the electronic communication device 105 but will not be used to send the electronic message 260. Typically, the sending account is the electronic message account 238 in which the electronic message 260. The non-limiting embodiment of method 400c contemplates, for example, attaching, to the electronic message 260, references of attachments 241 associated with sending accounts that are hosted by the sending-server.

Block 1332 comprises retrieving attachments 241 from non-sending accounts. For example, the processor 202, via the communications subsystem 204, sends a request for and receives a response containing the selected attachments from the electronic message server application 116 associated with the non-sending account with which the attachment 241 is associated. The request can include the electronic communication device 105 sending the necessary electronic message account credentials to the appropriate server 112. Those of ordinary skill in the art will appreciate that the non-sending account can be hosted by the same or different server 110 that is hosting the sending account. If the selected attachment is from a non-sending account but is already in the electronic communication device 105 (e.g., the electronic communication device 105 has previously received the attachment 241 while displaying the attachment 241), the processor 202 can retrieve the selected attachment 241 from the persistent storage of the electronic communication device 105 such as the flash memory 208.

Block 1335 comprises attaching attachments 241 or reference of attachments 241 to the electronic message 260. For example, the processor 202 causes the RAM 206 to add references of the selected attachment 241 or the actual attachment to the electronic message 260. Advantageously, sending references of attachments 241, rather than actual attachments, reduces network bandwidth usage.

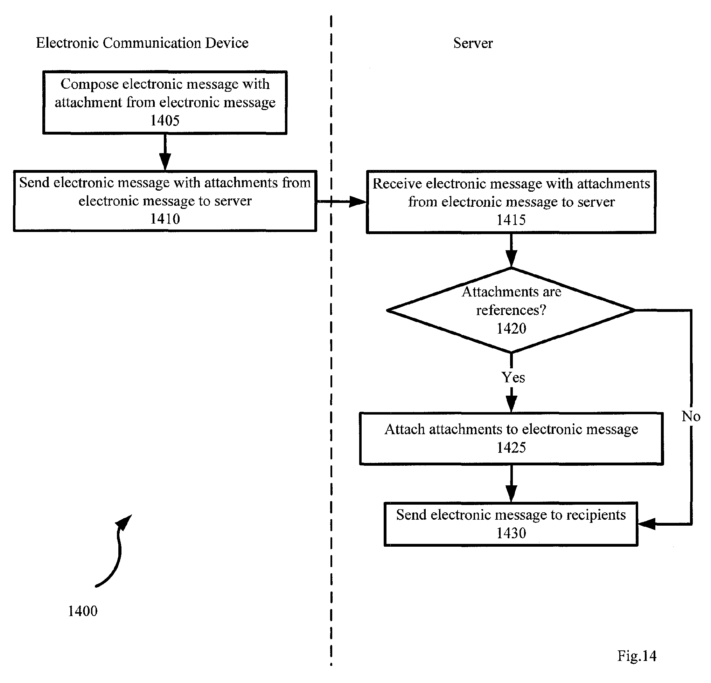

Figure 14 depicts a non-limiting embodiment of a method 1400 of sending an electronic message via the server 110. Block 1405 comprises composing the electronic message 260 using, for example, the methods 400, 400a, and 400b, 400c or variations thereof. Block 1410 comprises sending the electronic message 260 with attachments 241 from the electronic communication device 105 to the server 110 hosting the sending account. For example, the processor 202 can cause the communications subsystem 204 to send the electronic message 260 to the server 110. Block 1415 comprises the server 110 receiving the electronic message 260. For example, the processor 117, via the network interface 123, receives the electronic message 260. Block 1420 comprises the server 110 determining whether the attachments 241 in the electronic message 260 are references to attachments 241 or actual attachments 241. For example, the processor 117 determines whether the content of the attachments are references or actual attachments. If the determination at block 1320 is "Yes", the method 1400 advances to block 1425. Block 1425 comprises the server 110 attaching, to the electronic message 260, the attachments 241 associated with the attachment references attached to the electronic message 260. For example, the processor 117 retrieves the attachments 241 from the persistent memory 121 and attaches the attachments 241 to the electronic message 260. If the determination at block 1420 is "No", the method 1400 advances to block 1430. Block 1430 comprises the server 110 sending the electronic message 260 to the recipients of the electronic message 260. For example, the processor 117 causes the network interface 423 to send the electronic message 260 to the recipients of the electronic message 260. Method 1400, for example, can be used to send the electronic message 260 composed by methods 400, 400a, 400b, and 400c.

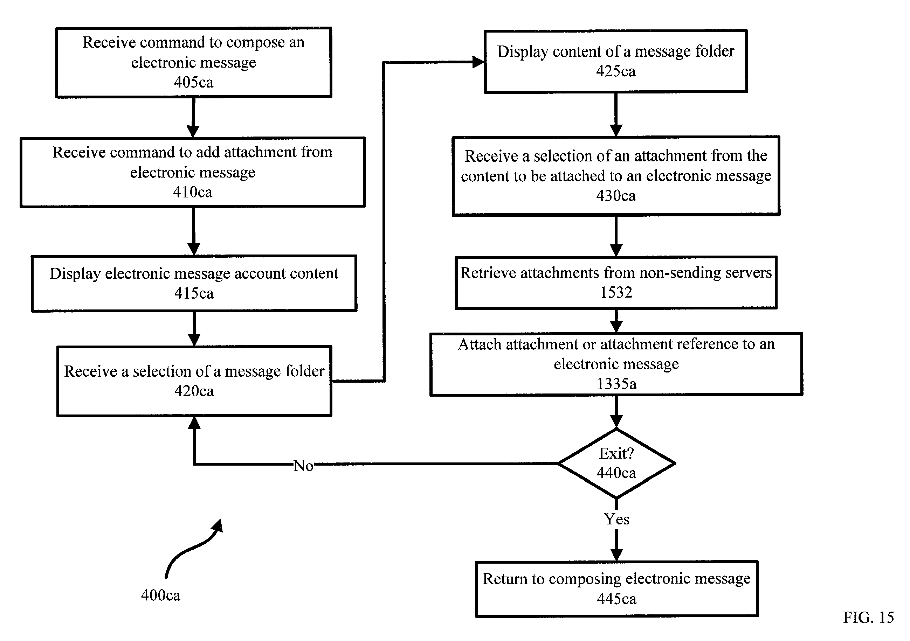

Figure 15 depicts a non-limiting example of a variation of the method 400c, generally indicated at 400ca. The method 400ca is similar to the method 400c, and like blocks bear like references except followed by the suffix "a". Of note is block 1532 of method 400ca replaces block 1332 of method 400c.

Block 1532 comprises retrieving attachments 241 from non-sending servers. For example, the processor 202, via the communications subsystem 204, sends a request for and receives a response containing the selected attachments from the electronic message server application 116, executing on a non-sending server, associated with the non-sending account with which the attachment 241 is associated. In the context of the present application (unless otherwise specified), a sending server is a server 110 that the electronic communication device 105 will use to send the electronic message 260 and a non-sending server is a server 110 that is associated with the electronic communication device 105 but will not be used to send the electronic message 260. Typically, the sending server is the server 110 hosting the sending-account. The non-limiting embodiment of method 400ca contemplates, for example, attaching, to the electronic message 260, references of attachments 241 associated with sending accounts and non-sending accounts that are hosted by the sending server. Advantageously, method 400ca increases the number of situations where references of attachments 241, rather than the actual attachments 241, can be sent, a benefit that reduces the use of network bandwidth thereby further reducing the bandwidth usage.

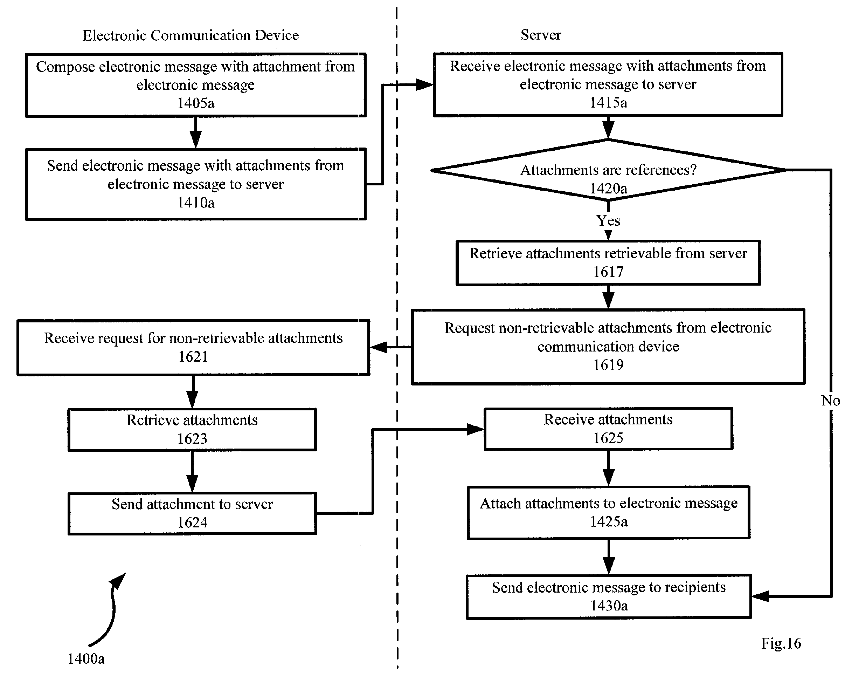

Figure 16 depicts a non-limiting example of a variation of the method 1400, generally indicated at 1400a. The method 1400a is similar to the method 1400, and like blocks bear like references except followed by the suffix "a". Of note is that the method 1400a includes an additional blocks 1617 to 1625 not present in method 1400.

Block 1617 comprises retrieving attachments 241 retrievable from server 110. For example, processor 117 retrieves attachments 241 from persistent memory 121 using reference to the attachments 241 to access the attachments 241.

Block 1619 comprises requesting non-retrievable attachments from the electronic communication device 105. For example, the processor 117 causes the network interface 123 to send a request for non-retrievable attachments to the electronic communication device 105. Those of ordinary skill in the art will appreciate that there are various reasons why the attachments 241 cannot be retrieved by the server 110. For example, the sending account does not have the credentials to access the account associated with the attachment 241, the attachment 241 is in another server 110 that is not accessible by the sending server, the reference was corrupted, the sending server does not understand the reference, etc ...

Block 1621 comprises the electronic communication device 105 receiving the request for non-retrievable attachments. For example, the processor 202, via the communications subsystem 204, receives the request for non-retrievable attachments. Block 1623 comprises retrieving the attachments 241. Block 1623 is similar to block 1332 of method 400c. Block 1624 comprises sending the attachment 241 to the server 110. For example, the processor 202 causes the communications subsystem 204 to transmit the attachments 241 (retrieved in block 1623) to the server 110.

Block 1625 comprises receiving the attachments 241. For example, the processor 117, via the network interface 123, receives the attachments 241. The attachments 241 comprise the attachments sent in block 1624. Those of ordinary skill in the art will appreciate that blocks 1619 to 1625 are optional and will not have to be performed if the sending server is able to retrieve the attachments 241 without the help of the electronic communication device 105. In that situation, method 1400a will advance from block 1617 to block 1425a.

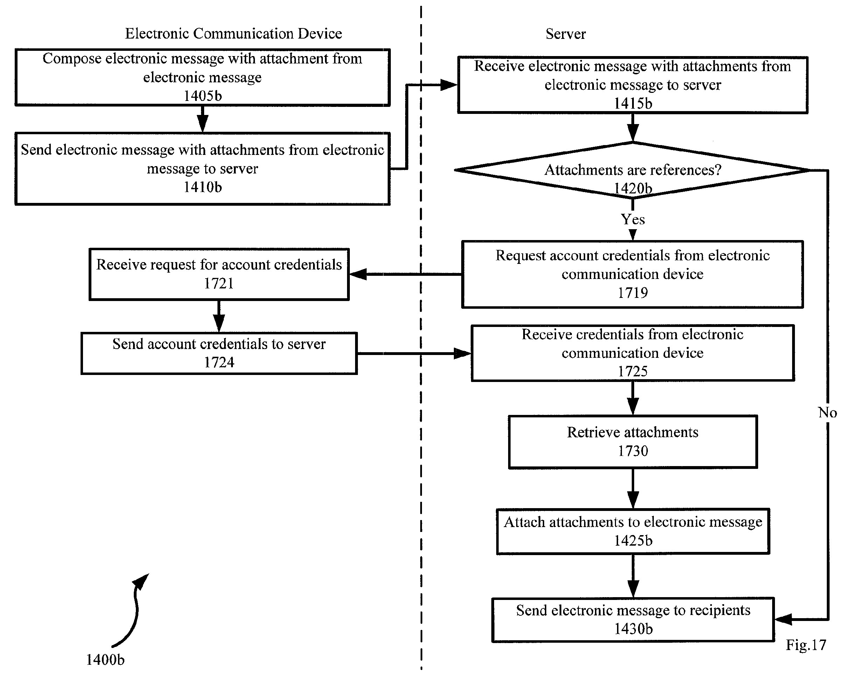

Figure 17 depicts a non-limiting example of another variation of the method 1400, generally indicated at 1400b. The method 1400b is similar to the method 1400, and like blocks bear like references except followed by the suffix "b". Of note is that the method 1400b includes an additional blocks 1719 to 1730 not present in method 1400.

Block 1719 comprises requesting account credentials from the electronic communication device 105. For example, the processor 117, via the network interface 123, sends the request for account credentials to the electronic communication device 105. Those of ordinary skill in the art will appreciate that there are various reasons why the sending server may not have the account credentials to retrieve attachments 214 via the references received in block 1415b. For example, the sending account does not have the credentials to access the account associated with the attachment 241, the attachment 241 is in another server 110 and is not accessible to the sending server without the necessary account credentials etc ...

Block 1721 comprises the electronic communication device 105 receiving the request for account credentials. For example, the processor 202, via the communications subsystem 204, receives the request for account credentials. Block 1724 comprises sending the account credentials to the server 110. For example, the processor 202 causes the communications subsystem 204 to send the account credentials to the server 110.

Block 1725 comprises receiving the account credentials from the communication device 105. For example, the processor 117, via the network interface 117, receives the account credentials via the network 115 from the processor 202. Block 1730 comprises retrieving the attachments 241. For example, the processor 202 can retrieve attachments 241 from the sending account or using appropriate credentials to retrieve attachments from non-sending accounts including those from the non-sending server. Those of ordinary skill in the art will appreciate that blocks 1719 to blocks 1725 do not need to be performed if the sending server already has the account credentials (e.g, in a cache). In that situation, the method 1400b will advance from block 1420b to 1730 when a "Yes" determination is made at block 1420b.

Those of ordinary skill in the art will appreciate that some blocks may result in the generation of representation of an error on display 210. For example, the electronic communication device 105 fails to retrieve attachments in step 1332, 1532, or 1623.

Advantageously, the non-limiting embodiment of methods 1400a and 1400b or variation thereof can be used to increase the number of situations where references of attachments, rather than the actual attachments, can be sent to the sending server. This in turn reduces the use of the network bandwidth and the processing required by the electronic communication device 105.

A variation of some of the above methods or combination thereof is disclosed below.

Client Side Flowchart:

1) Request received to add one or more attachments.

2) Q: Does the electronic communication device have more attachments to add

3) Yes

a. Is the sending server capable of understanding attachment references?

b. Yes

i. Does the reference attachment reside on the same server as the sending server?

ii. Yes

A. Does the reference attachment reside on the same account as the sending server?

B. Yes

a. Relay the attachment reference to the server to get the attachment.

b. Go to 2)

C. No

a. Relay the attachment reference and the other account credentials to the server, to get the attachment.

b. Go to 2)

iii. No

A. Can the sending server and the server with the attachment both able to communicate and exchange attachment (server/server communication)?

B. Yes

a. Relay the attachment reference and authentication details to the sending server to get the attachment by reference.

C. No

a. Get the attachment from the other server (one with the attachment)

b. Send the attachment to the electronic message server as an actual attachment and not as a reference.

c. Go to 2)

c. No

i. Get the attachment from the attachment server (one with the attachment)

ii. Send the attachment to the electronic message server as an actual attachment and not as a reference.

iii. Go to 2)

4) No

a. All attachments added.

b. Send electronic message.

Server Side Flowchart:

1) Request received to add one or more attachments.

2) Q: Does the server have more attachments to add

3) Yes

a. Is the attachment a reference?

b. Yes

i. Does it reside on the sending account?

ii. Yes

A. Get the attachment.

B. Go to 2)

iii. No

A. Does it reside on the same server (different account)?

B. Yes

a. Does the server have the credentials to access that account and get attachment?

b. Yes (assuming credentials are correct) (there is a case for error in credentials as well)

i. Get attachment

ii. Go to 2)

c. No

i. Ask the electronic communication device for the attachment fetching credentials.

ii. Wait for attachment credentials

iii. Credentials received in reasonable time?

iv. Yes

A. Get attachment

B. Go to 2)

v. No

A. ERROR

B. Go to 2)

C. No

a. Does the other server understand reference attachments and can it directly send me the attachment?

b. Yes

i. Does the server have the credentials to access that account and get attachment?

ii. Yes (assuming credentials are correct) (there is a case for error in credentials as well)

A. Get attachment

B. Go to 2)

iii. No

A. Ask the electronic communication device for the attachment fetching credentials.

B. Wait for attachment credentials

C. Credentials received in reasonable time?

D. Yes

a. Get attachment

b. Go to 2)

E. No

a. ERROR

b. Go to 2)

c. No

i. Ask the electronic communication device to get the attachment and send as an actual attachment and not as a reference

ii. Go to 2)

c. No

i. Attach the attachment.

ii. Go to 2)

Those skilled in the art will appreciate that in some embodiments, the functionality of electronic communication device 105 and the server 110 can be implemented using pre-programmed hardware or firmware elements (e.g., application specific integrated circuits (ASICs), electrically erasable programmable read-only memories (EEPROMs), etc.), or other associated components. In other embodiments, the functionality of electronic communication device 105 can be achieved using a communication apparatus that has access to a code memory (not shown) which stores computer-readable program code for operation of the communication apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Those skilled in the art will now recognize certain advantages from this specification. An electronic communication device typically has limited processing capacity and memory capacity. Electronic communication devices such as mobile devices also have limited battery power. Network bandwidth can be expensive or limited. These limited resources would be strained, if adding an attachment to an electronic message that is being composed from another electronic message, requires the electronic communication device to first store an attachment from the other electronic message to a memory and then retrieving the attachment from the memory to attach the attachment to the electronic message that is being composed. There will be an increased use of processing power to execute the extra steps of saving the attachment to the memory, retrieving the attachment from the memory, and deleting the attachment from the memory. There will likely be a need for a memory manager to clean up the memory by deleting attachments that were not deleted. There will be an increased use of the memory to store the attachment and an increased use in power to store and retrieve the attachment. This specification can obviate or at least mitigate at least some of these problems.

Persons skilled in the art will appreciate that there are yet more alternative implementations and modifications possible for implementing the implementations, and that the above implementations and examples are only illustrations of one or more implementations. Variations, subsets, enhancements and combinations of the foregoing are contemplated.

## Claims

1. An electronic communication device comprising:
a processor configured to receive a first command to compose a first electronic message;
a display, in response to the processor receiving a second command to add an attachment from an electronic message, configured to display a content of a message folder;
the processor further configured to receive a first selection of a first attachment from a second electronic message from the content; and
the processor further configured to attach the first attachment to the first electronic message.

2. The electronic communication device of claim 1, comprising:
the processor further configured to receive a second selection of a second attachment from a third electronic message; and
the processor further configured to attach the second attachment to the first electronic message.

3. The electronic communication device of claim 2, wherein the second electronic message is from a first message folder and the third electronic message is from a message folder different from the first message folder.

4. The electronic communication device of claim 2 or claim 3, wherein the second electronic message is from a first electronic message account and the third electronic message is from an account different from the first electronic message account.

5. The electronic communication device of any of claims 2 to 4, wherein the second electronic message is from a first server and the third electronic message is from a server different from the first server.

6. The electronic communication device of any of claims 1 to 5, wherein the content includes a list of attachments compiled from a search of the message folder.

7. The electronic communication device of claims 1 to 5, wherein the content includes a list of attachments that were received within a predefined durationprior to a current time.

8. A method implemented on an electronic communication device for composing an electronic message, the method comprising:
receiving a first command to compose a first electronic message;
displaying, in response to receiving a second command to add an attachment from an electronic message, a content of a message folder;
receiving a first selection of a first attachment from a second electronic message from the content; and
attaching the first attachment to the first electronic message.

9. The method of claim 8, comprising:
receiving a second selection of a second attachment from a third electronic message; and
attaching the second attachment to the first electronic message.

10. The method of claim 9, wherein the second electronic message is from a first message folder and the third electronic message is from a message folder different from the first message folder..

11. The method of claim 9 or claim 10, wherein the second electronic message is from a first electronic message account and the third electronic message is from an account different from the first electronic message account

12. The method of any of claims 9 to 11, wherein the second electronic message is from a first server and the third electronic message is from a server different from the first server.

13. The method of any of claims 8-12, wherein the displaying content includes displaying a list of attachments compiled from a search of the message folder

14. The method of any of claims 8-12, wherein the displaying content includes displaying a list of attachments that were received within a predefined duration prior to a current time.

15. A computer program product, for an communication device, comprising a computer readable storage medium having a computer-readable program code adapted to be executable on the communication device to implement the method for composing an email, the method comprising steps of claims 8 to 14.

## Amended claims

### Amended claims in accordance with Rule 137(2) EPC.

**1.** An electronic communication device comprising:
a processor (202) configured to receive a first command to compose a first electronic message (260);
a display, in response to the processor (202) receiving a second command to add an attachment from an electronic message, configured to display a content of a message folder;
the processor (202) further configured to receive a first selection of a first attachment (241) from a second electronic message (240) from the content; and
the processor (202) further configured to attach the first attachment (241) to the first electronic message (260).

**2.** The electronic communication device of claim 1, comprising:
the processor (202) further configured to receive a second selection of a second attachment from a third electronic message; and
the processor (202) further configured to attach the second attachment to the first electronic message (260).

**3.** The electronic communication device of claim 2, wherein the second electronic message (240) is from a first message folder and the third electronic message is from a message folder different from the first message folder.

**4.** The electronic communication device of claim 2 or claim 3, wherein the second electronic message (240) is from a first electronic message account and the third electronic message is from an account different from the first electronic message account.

**5.** The electronic communication device of any of claims 2 to 4, wherein the second electronic message (240) is from a first server and the third electronic message is from a server different from the first server.

**6.** The electronic communication device of any of claims 1 to 5, wherein the content includes a list of attachments compiled from a search of the message folder.

**7.** The electronic communication device of claims 1 to 5, wherein the content includes a list of attachments that were received within a predefined duration prior to a current time.

**8.** A method implemented on an electronic communication device comprising a processor (202) and a display (210) for composing an electronic message, the method comprising:
receiving, via the processor (202), a first command to compose a first electronic message (260);
displaying, via the display (210), in response to receiving a second command to add an attachment from an electronic message, a content of a message folder;
receiving, via the processor (202), a first selection of a first attachment (241) from a second electronic message (240) from the content; and
attaching, via the processor (202), the first attachment (241) to the first electronic message (260).

**9.** The method of claim 8, comprising:
receiving, via the processor (202), a second selection of a second attachment from a third electronic message; and
attaching, via the processor (202), the second attachment to the first electronic message (260).

**10.** The method of claim 9, wherein the second electronic message (240) is from a first message folder and the third electronic message is from a message folder different from the first message folder.

**11.** The method of claim 9 or claim 10, wherein the second electronic message (240) is from a first electronic message account and the third electronic message is from an account different from the first electronic message account.

**12.** The method of any of claims 9 to 11, wherein the second electronic message (240) is from a first server and the third electronic message is from a server different from the first server.

**13.** The method of any of claims 8-12, wherein the displaying content includes displaying a list of attachments compiled from a search of the message folder.

**14.** The method of any of claims 8-12, wherein the displaying content includes displaying a list of attachments that were received within a predefined duration prior to a current time.

**15.** A computer program product, for an communication device, comprising a computer readable storage medium having a computer-readable program code adapted to be executable on the communication device to implement the method for composing an email, the method comprising steps of claims 8 to 14.
